# EUROPEAN PATENT APPLICATION

(11) **EP 4 421 891 A1**
(43) Date of publication of application: **28.08.2024**
(21) Application number: 23217409.4
(22) Date of filing: 18.12.2023
(51) Int. Cl.: H01M 4/04, H01M 50/533, B23K 26/38

(54) **METHOD FOR FORMING AN ELECTRODE FOR ELECTROCHEMICAL CELLS AND ELECTRODE FOR ELECTROCHEMICAL CELLS**

(30) Priority: 27.02.2023 IT 202300003456; 27.02.2023 IT 202300003459
(71) Applicant: G.D S.p.A., 40133 Bologna (BO) (IT)
(72) Inventor: SPIRITO, Gilberto, I-40133 Bologna (IT)
(74) Representative: Porta & Consulenti Associati S.p.A.

(57) **Abstract**

A method for forming an electrode for electrochemical cells comprises arranging an electrode sheet (11) having a thickness, a length (L) and a height (H), wherein the length (L) is measured along a longitudinal direction, the height (H) is measured along a transverse direction and the thickness is measured along a direction perpendicular to the longitudinal direction and the transverse direction, said electrode sheet (11) having a longitudinal free edge (12a); cutting a plurality of tabs (17) on the electrode sheet (11) in a first portion (15) of the electrode sheet extending transversely from the free edge (12a); reducing the thickness of the electrode sheet (11) along a longitudinal track (20) contained in the first portion (15) of the electrode sheet (11).

## Description

The present invention refers to a method for forming an electrode for electrochemical cells and to an electrode for electrochemical cells.

The present invention is used in a process for making electrochemical cells, for example secondary electrochemical cells, comprising electrodes separated from each other by a dielectric separator.

The electrochemical cells can be produced by winding two electrode sheets, with a dielectric separator foil interposed between the two electrode sheets. The two electrode sheets act as anode and cathode for the electrochemical cell.

Usually, each electrode sheet is obtained by depositing a layer of active material for electrodes on one surface or on both surfaces of a current-collecting metal sheet. By choosing a suitable combination of active material for electrodes and of material of the metal sheet, it is possible to obtain positive electrode sheets and negative electrode sheets.

The metal sheets are not completely coated with active material for electrodes, but no active material for electrodes is applied to both free edges or on only one free edge of the metal sheet.

The electrode sheets are wound in such a way that, in correspondence of one end of the electrochemical cell, a first electrode sheet protrudes beyond the separator foil (to define an electrical pole of the electrochemical cell) and in such a way that the separator foil protrudes beyond the second electrode sheet (to avoid short circuits between the two electrode sheets). Similarly, in correspondence of the second end of the electrochemical cell, the second electrode sheet protrudes beyond the separator foil and the separator foil protrudes beyond the first electrode sheet.

Each part of the electrode sheet protruding with respect to the separator foil is not coated with active material and is used to define an electrical pole of the electrochemical cell. In particular, the part of each electrode sheet protruding with respect to the separator foil must be folded towards a central axis of the electrochemical cell so as to define a (more or less regular) electric pole surface of the electrochemical cell to which an electric pole plate can be connected or which can be connected to a battery pole.

To enable the protruding part of electrode sheet to be folded correctly, a plurality of tabs are obtained on this part of the electrode sheet (which substantially coincides with the free edge of the metal sheet on which no active material for electrodes is applied) before the two electrode sheets are wound together with the separator foil.

In the Applicant's experience, in order to fold the tabs of each electrode sheet it is necessary to exert a folding pressure on these tabs directed towards the central axis of the electrochemical cell. This folding pressure, even if exerted in correspondence of the tabs only, also tends to be transmitted to the portion of the electrode sheet immediately adjacent to the tabs. Such a portion of electrode sheet is superimposed on and supported by the separator foil. However, in correspondence of such portion of electrode sheet the separator foil is not superimposed on and supported by the other electrode sheet.

In accordance with the Applicant's experience while folding the tabs, it may therefore happen that even portions of the electrode sheet not affected by the tabs may fold.

Therefore, in accordance with the Applicant's experience it is not always possible to guarantee that the electrode sheets used in a process for forming electrochemical cells are actually folded, at the tabs, always at the desired folding zone.

The Applicant considers that in order to obtain reliable and repeatable processes for making electrochemical cells, a need is felt to be able to fold the tabs of the electrode sheets in correspondence of desired or chosen folding zones.

The Applicant has perceived that it would be advantageous to be able to have a line extending longitudinally on the electrode sheet that may be able to facilitate or guide the rotation of the flaps during the folding thereof.

The Applicant has found that by structurally weakening the electrode sheet along a longitudinal path arranged on the electrode sheet, the tabs would be more easily rotated and then folded about that longitudinal path when a folding pressure is applied thereon, so as to predefine a folding zone of the tabs of the electrode sheet.

The present invention therefore concerns, in a first aspect thereof, a method for forming an electrode for electrochemical cells.

Preferably, it is provided to arrange an electrode sheet having a thickness, a length and a height, wherein the length is measured along a longitudinal direction, the height is measured along a transverse direction and the thickness is measured along a direction perpendicular to the longitudinal direction and the transverse direction.

Preferably, said electrode sheet has a longitudinal free edge.

Preferably, it is provided to cut a plurality of tabs on said electrode sheet in a first portion of electrode sheet extending transversely from said free edge.

Preferably, it is provided to reduce the thickness of the electrode sheet along a longitudinal track contained in said first portion of electrode sheet.

The present invention concerns, in a second aspect thereof, an electrode for electrochemical cells.

Preferably, there is provided an electrode sheet having a thickness, a length and a height, wherein the length is measured along a longitudinal direction, the height is measured along a transverse direction and the thickness is measured along a direction perpendicular to the longitudinal direction and the transverse direction.

Preferably, said electrode sheet has a longitudinal free edge.

Preferably, there is provided a plurality of tabs obtained on said electrode sheet in a first portion of electrode sheet extending transversely from said free edge.

Preferable, there is provided a longitudinal track contained in said first portion of electrode sheet and along which the thickness of the electrode sheet is reduced.

The Applicant has verified that the reduction in thickness of the electrode sheet along the longitudinal track can actually create a preferential folding line for the tabs which tends to define a hinge line along which the tabs fold when subjected to a folding pressure outside the plane defined by the electrode sheet.

In this description and in the subsequent claims, the term "longitudinal" means a direction that is substantially parallel to a direction of major extension of an electrode sheet. Considering an electrode sheet as a plate whose thickness is remarkably thin, a longitudinal direction extends between the two opposite and furthest free edges of such a plate.

In this description and in the subsequent claims, the term "transverse" means a direction contained in a plane containing a longitudinal direction and substantially perpendicular to a longitudinal direction. Considering an electrode sheet as a plate whose thickness is remarkably thin, a transverse direction extends between the two opposite and closest free edges of such a plate.

In this description and in the subsequent claims, the terms "transversely outer" and "transversely inner" mean, respectively, positions along a transverse direction that are closer to and more distal from a longitudinal free edge.

The present invention can have at least one of the preferred features described below. These characteristics may be present singly or in combination with each other, unless expressly stated otherwise, in both the method for forming an electrode for electrochemical cells and in the electrode for electrochemical cells of the present invention.

Preferably, the thickness of the electrode sheet is at least two orders of magnitude less than the dimension in the transverse direction of the electrode sheet.

Preferably, the dimension in the transverse direction of the electrode sheet is at least one order of magnitude smaller than the dimension in the longitudinal direction of the electrode sheet.

Preferably, the first portion of electrode sheet is not coated with active material for electrodes.

Preferably, said electrode sheet comprises a second portion of electrode sheet transversely consecutive to said first portion of electrode sheet.

Preferably, said second portion of the electrode sheet is coated with active material for electrodes.

Preferably, cutting a plurality of tabs comprises providing a plurality of tabs wherein each tab extends from a transversely outer end to a transversely inner end.

Preferably, the transversely outer end of the tab coincides with said longitudinal free edge of the electrode sheet.

Preferably, said longitudinal track is placed between the transversely outer end and the transversely inner end of said tabs.

Preferably, said longitudinal track passes through the transversely inner end of said tabs.

Preferably, said plurality of tabs is contained in said first portion of electrode sheet.

Preferably, the transversely inner ends of the tabs of said plurality of tabs are aligned with each other along a straight line.

Preferably, this straight line extends in a longitudinal direction.

Preferably, said longitudinal track is aligned with said straight line.

Preferably, said longitudinal track coincides with said straight line.

Preferably, said longitudinal track comprises weakening sections.

Preferably, said weakening sections are sections in which the thickness of the electrode sheet is reduced.

Preferably, the weakening sections are consecutive to each other.

Preferably, the weakening sections follow one another in the longitudinal direction along the longitudinal track.

In one embodiment, preferably the weakening sections follow one another in the longitudinal direction with continuity in such a way as to provide a single continuous weakening section.

In other embodiments, preferably said longitudinal track comprises weakening sections and non-weakened sections.

Preferably, the non-weakened sections are alternated with the weakened sections.

Preferably, the weakened sections have equal length in the longitudinal direction.

Preferably, the non-weakened sections have equal length in the longitudinal direction.

Preferably, the weakened sections and the non-weakened sections have equal length in the longitudinal direction.

Preferably, reducing the thickness of the electrode sheet comprises reducing the thickness of the electrode sheet along all the weakening sections of the longitudinal track.

Preferably, reducing the thickness of the electrode sheet comprises reducing the thickness of the electrode sheet only along the weakening sections of the longitudinal track.

Preferably, reducing the thickness of the electrode sheet comprises reducing the thickness of the electrode sheet by an amount of between 5% and 70% along certain weakening sections and between 5% and 100% along other weakening sections.

Preferably, reducing the thickness of the electrode sheet by an amount of 100% comprises providing a pass-through notch in the electrode sheet.

Preferably, reducing the thickness of the electrode sheet comprises reducing the thickness of the electrode sheet by an amount of between 5% and 70% along all the weakening sections.

Preferably, reducing the thickness of the electrode sheet comprises reducing the thickness of the electrode sheet by an amount of between 5% and 50% along all the weakening sections.

Preferably, reducing the thickness of the electrode sheet comprises reducing the thickness of the electrode sheet by an amount of between 10% and 40% along all the weakening sections.

Preferably, reducing the thickness of the electrode sheet comprises reducing the thickness of the electrode sheet by an amount of between 10% and 20% along all the weakening sections.

Preferably, the thickness of the electrode sheet is reduced, in correspondence of the weakening sections, on only one surface of the electrode sheet.

Preferably, the reduction in thickness of the electrode sheet is the same for all weakened sections.

In some embodiments, preferably the reduction in thickness of the electrode sheet is not the same for all weakened sections.

Preferably, reducing the thickness of the electrode sheet comprises providing pass-through notches on the electrode sheet in correspondence of at least some weakening sections.

In some embodiments in which there are provided weakened sections and non-weakened sections, reducing the thickness of the electrode sheet comprises providing pass-through notches in the electrode sheet in correspondence of all the weakening sections.

Preferably, when no non-weakened sections are provided, reducing the thickness of the electrode sheet comprises providing pass-through notches in the electrode sheet in correspondence of only some weakening sections.

Preferably, reducing the thickness of the electrode sheet comprises leaving the non-weakened sections untouched.

Preferably, the dimension in transverse direction of the weakening sections is between about half of the thickness of the electrode sheet and about five times the thickness of the electrode sheet.

Preferably, the dimension in the transverse direction of the weakening sections is between the thickness of the electrode sheet and twice the thickness of the electrode sheet.

Preferably, the reduction in thickness of the electrode sheet is obtained by removing material from the electrode sheet.

Such removal of material may preferably be obtained by mechanical removal of material by vaporization or by ablation.

The Applicant has in fact verified that a reduction in the thickness of the electrode sheet by crushing material would be less effective in creating a preferential folding line for the tabs when subjected to a folding pressure outside the plane defined by the electrode sheet.

Preferably, reducing the thickness of the electrode sheet comprises directing a laser beam onto the electrode sheet along said longitudinal track and onto said weakening sections.

Preferably, directing a laser beam onto the electrode sheet comprises transporting the electrode sheet along a transport direction and moving said laser beam relative to the electrode sheet.

Preferably, the electrode sheet is transported along a longitudinal direction.

Preferably, cutting a plurality of tabs is implemented using said laser beam.

Preferably, reducing the thickness of the electrode sheet is implemented during the transport of the electrode sheet along the transport direction.

Preferably, reducing the thickness of the electrode sheet is implemented with the same laser with which cutting a plurality of tabs is implemented.

Preferably, reducing the thickness of the electrode sheet is implemented substantially at the same time as cutting a plurality of tabs.

Preferably, at least when the reduction of the thickness of the electrode sheet is less than 100%, cutting a plurality of tabs is carried out by implementing said laser at a first power and wherein reducing the thickness of the electrode sheet is carried out by implementing said laser at a second power; said first power being greater than said second power.

Further characteristics and advantages of the present invention will become clearer from the following detailed description of a preferred embodiment thereof, with reference to the appended drawings and provided by way of indicative and non-limiting example, wherein:
- Figure 1 is a frontal schematic view of a portion of electrode for electrochemical cells in accordance with the present invention;
- Figures 2 to 4 are frontal schematic views of possible alternative embodiments of the electrode in figure 1;
- Figure 5 is a schematic view of a device capable of implementing a method for forming an electrode for electrochemical cells in accordance with the present invention; and
- Figure 6 is a schematic view of an implementation step of a method for forming an electrode for electrochemical cells in accordance with the present invention.

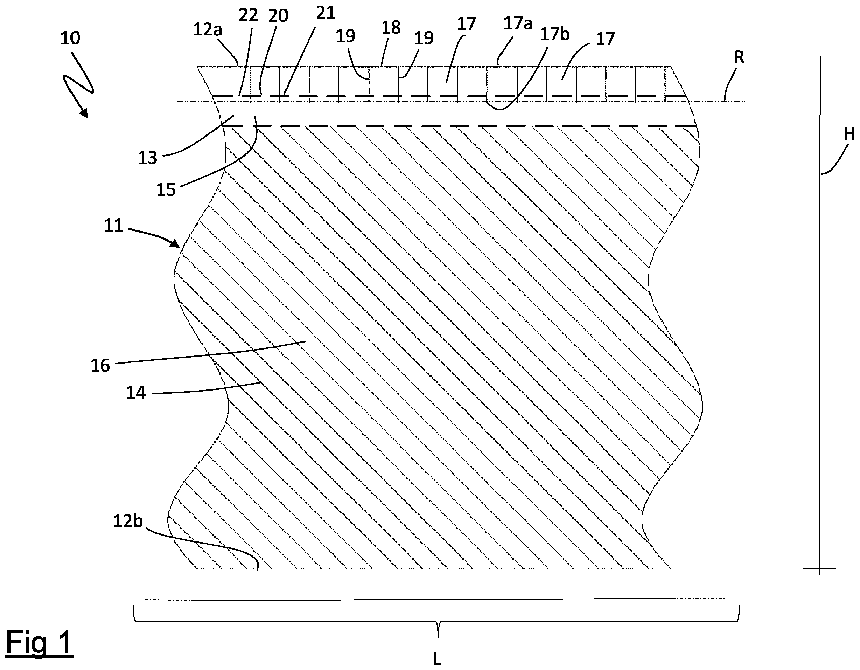

An electrode for electrochemical cells in accordance with the present invention has been indicated by reference number 10 in figure 1.

The electrode 10 can be used to make a cathode or an anode of an electrochemical cell.

The electrode 10 comprises an electrode sheet 11 having a thickness between 3 microns and 500 microns. The electrode sheet 11 has a length L between 1 metre and 50 metres, preferably between 2 metres and 20 metres, for example of about 6 metres. The electrode sheet 11 has a height H that typically depends on the height of the electrochemical cell to be made. The height H of the electrode sheet 11 may, for example, be approximately equal to the height of the electrochemical cell to be made or it may be equal to approximately twice the height of the electrochemical cell to be made. By way of example, the height H of the electrode sheet can be between 3 centimetres and 30 centimetres, preferably between 4 centimetres and 20 centimetres, for example of about 10 centimetres.

The electrode sheet 11 comprises opposite longitudinal free edges 12a, 12b which extend substantially over the entire length of the electrode sheet 11 and which are spaced from each other by said height H of the electrode sheet 11.

The electrode sheet 11 comprises a current collector 13 in the form of a sheet which may be a metal sheet or an alloy sheet; the metal sheet may comprise copper, titanium, aluminium, platinum, iridium, ruthenium, nickel, tungsten, tantalum, gold or silver, and the alloy sheet may comprise stainless steel or an alloy including at least one of the following elements: copper, titanium, aluminium, platinum, iridium, ruthenium, nickel, tungsten, tantalum, gold or silver.

The electrode sheet 11 also comprises an active material for electrodes 14 applied to one or both surfaces of the current collector 13.

The active material for electrodes 14 may be an anodic or cathodic material and may comprise, in the case of anodic material, graphite or other carbonaceous materials or silicon-based materials and, in the case of cathodic material, lithium oxide, nickel, manganese, cobalt, aluminium or lithium and iron phosphate-based materials.

As schematically illustrated in figure 1, the active material for electrodes 14 only partially covers the current collector 13.

In preferred embodiments of the invention, the electrode sheet 11 comprises at least a first portion 15 which does not have the active material for electrodes 14 and a second portion 16 which has the active material for electrodes 14. The first portion of free edge 15 and the second portion of free edge 16 extend longitudinally substantially over the entire length L of the electrode sheet 11.

In the embodiment illustrated in figure 1, there is provided only a first portion 15 of electrode sheet 11 that does not have the active material for electrodes 14. In other embodiments not illustrated, it may be provided for two first portions 15 transversely opposite each other and separated from the second portion 16.

The first portion 15 extends transversely from a free edge 12a towards the other free edge 12b without, however, reaching said other free edge 12b. The extension in transverse direction of the first portion 15 is smaller than the transverse extension of the second portion 16 of electrode sheet 11.

The electrode sheet 11 comprises a plurality of tabs 17 placed in the first electrode portion 15.

As illustrated in figure 1, the tabs 17 extend transversely from the free edge 12a towards the second portion 16 without, however, reaching the second portion 16 of electrode sheet 11.

The tabs 17 follow one another longitudinally along the electrode sheet 11.

Each tab 17 comprises an upper edge 18 and two opposite side edges 19. The upper edge 18 is substantially aligned with the free edge 12a of the electrode sheet 11 and the side edges 19 extend in a transverse direction from the upper edge 18.

The upper edge 18 of each tab 17 defines a transversely outer end 17a of the tab 17 and the point of the side edges 19 transversely more distal from the upper edge 18 defines a transversely inner end 17b of the tab 17.

As illustrated in figure 1, the transversely inner ends 17b of the tabs 17 are aligned with each other along a straight line R. This straight line R is preferably parallel to the free edge 12a of the electrode sheet 11. The line R is completely contained in the first portion 15 of electrode sheet 11, i.e. the portion of electrode sheet 11 that does not have the active material for electrodes 14.

In the preferred embodiment of the invention, a side edge 19 of a first tab 17 is immediately adjacent to the side edge 19 of a second adjacent tab 17 in the longitudinal direction. In this embodiment, as illustrated in figure 1, each tab 17 is separated from an immediately preceding and consecutive tab 17 by a distance much smaller than the width in the longitudinal direction of the tab 17. The distances in the longitudinal direction separating two adjacent tabs 17 are all equal to each other.

The electrode 10 comprises a longitudinal track 20 which extends entirely in the first portion 15 of the electrode sheet 11 and along which the thickness of the electrode sheet 11 is reduced with respect to the thickness of the electrode sheet 11 outside the longitudinal track 20.

The longitudinal track 20 is substantially straight. The longitudinal track 20 is substantially parallel to the longitudinal free edge 12a.

The longitudinal track 20 may comprise only weakening sections 21 or may comprise weakening sections 21 and non-weakened sections 22.

The weakening sections 21 are sections of the longitudinal track 20 in which the thickness of the electrode sheet 11 is reduced, while the non-weakened sections 22 are sections of the longitudinal track 20 in which the thickness of the electrode sheet 11 is left untouched.

In the embodiment example of figure 1, the longitudinal track 20 comprises weakening sections 21 and non-weakened sections 22.

The weakening sections 21 alternate along the longitudinal track 20 with the non-weakened sections 22.

The weakening sections 21 have equal lengths in the longitudinal direction.

The non-weakened sections 22 have equal lengths in the longitudinal direction with respect to each other.

The length in the longitudinal direction of at least one weakening section 21 is greater than the length in the longitudinal direction of any non-weakened section 22.

The length in the longitudinal direction of any weakening section 21 is greater than the length in the longitudinal direction of any non-weakened section 22.

Only some of the weakening features 21 intercept side edges 19 of respective tabs 17. In other words, the length in the longitudinal direction of the weakening sections 21 is smaller than the distance, measured in the longitudinal direction, between the two side edges 19 of a tab 17.

The longitudinal track 20 is positioned between the transversely outer end 17a and the transversely inner end 17b of the tabs 17.

Along the weakening sections 21, the thickness of the electrode sheet 11 is reduced by an amount of between 5% and 70%, for example it is reduced by between 8% and 22%.

Along all the weakening sections 21, the thickness of the electrode sheet 11 is reduced by a same amount.

Alternatively, along the weakening sections 21, the thickness of the electrode sheet 11 is reduced by 100%. In this case, the thickness of the electrode sheet 11 is substantially zeroed by pass-through notches on the electrode sheet 11 in correspondence of the weakening sections 21.

Alternatively, along some weakening sections 21, the thickness of the electrode sheet 11 is reduced by an amount of between 5% and 70%, for example it is reduced by between 8% and 22% and in other weakening sections the thickness of the electrode sheet 11 it is reduced by 100% by pass-through notches.

In some such alternative embodiments, the longitudinal track 20 passes through the transversely inner end 17b of the tabs 17. In these embodiments, the longitudinal track 20 is coincident with the straight line R with which the transversely inner ends 17b of the tabs 17 are aligned.

In alternative embodiments, the length in the longitudinal direction of the weakening sections 21 is equal to the length in the longitudinal direction of the non-weakened sections 22.

In some such alternative embodiments, the length in the longitudinal direction of the weakening sections 21 is equal to the distance, measured in the longitudinal direction, between the two side edges 19 of a tab 17.

In some such alternative embodiments, all of the weakening features 21 intercept respective side edges 19 of respective tabs 17.

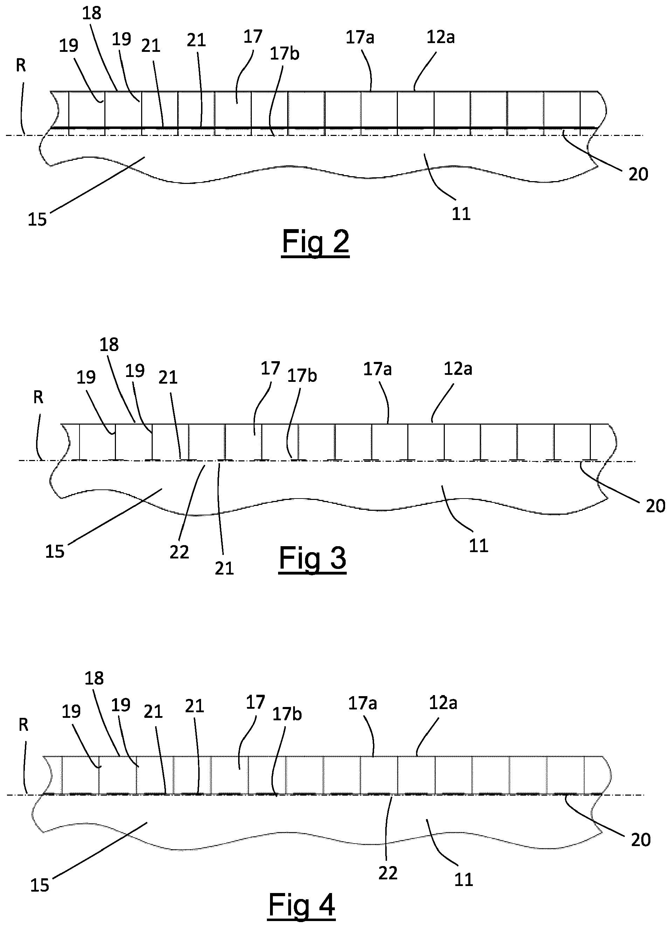

In the embodiment of figure 2, the longitudinal track 20 comprises only weakening sections 21.

The weakening sections 21 are continuous with each other and, substantially, make a single weakening section 21.

The weakening sections 21 intercept respective side edges 19 of respective tabs 17.

The longitudinal track 20 is positioned between the transversely outer end 17a and the transversely inner end 17b of the tabs 17.

Along the weakening sections 21, the thickness of the electrode sheet is reduced by an amount of between 5% and 70%, for example it is reduced by between 8% and 22%.

Along all the weakening sections 21, the thickness of the electrode sheet is reduced by a same amount.

In some such alternative embodiments, the longitudinal track 20 passes through the transversely inner end 17b of the tabs 17. In these embodiments, the longitudinal track 20 is coincident with the straight line R with which the transversely inner ends 17b of the tabs 17 are aligned.

In the embodiment example of figure 3, the longitudinal track 20 comprises weakening sections 21 and non-weakened sections 22.

The weakening sections 21 alternate along the longitudinal track 20 with the non-weakened sections 22.

The weakening sections 21 have equal lengths in the longitudinal direction.

The non-weakened sections 22 have equal lengths in the longitudinal direction with respect to each other.

The length in the longitudinal direction of at least one weakening section 21 is greater than the length in the longitudinal direction of any non-weakened section 22.

The length in the longitudinal direction of any weakening section 21 is greater than the length in the longitudinal direction of any non-weakened section 22.

All the weakening sections 21 intercept respective side edges 19 of respective tabs 17.

The longitudinal track 20 passes through the transversely inner end 17b of the tabs 17. The longitudinal track 20 is coincident with the straight line R with which the transversely inner ends 17b of the tabs 17 are aligned.

Along the weakening sections 21, the thickness of the electrode sheet 11 is reduced by an amount of between 5% and 70%, for example it is reduced by between 8% and 22%.

Along all the weakening sections 21, the thickness of the electrode sheet 11 is reduced by a same amount.

Alternatively, along the weakening sections 21, the thickness of the electrode sheet 11 is reduced by 100%. In this case, the thickness of the electrode sheet 11 is substantially zeroed by pass-through notches on the electrode sheet 11 in correspondence of the weakening sections 21.

Alternatively, along some weakening sections 21, the thickness of the electrode sheet 11 is reduced by an amount of between 5% and 70%, for example it is reduced by between 8% and 22% and in other weakening sections the thickness of the electrode sheet 11 it is reduced by 100% by pass-through notches.

In some such alternative embodiments, the longitudinal track 20 is positioned between the transversely outer end 17a and the transversely inner end 17b of the tabs 17.

In alternative embodiments, the length in the longitudinal direction of the weakening sections 21 is equal to the length in the longitudinal direction of the non-weakened sections 22.

In some such alternative embodiments, the length in the longitudinal direction of the weakening sections 21 is equal to the distance, measured in the longitudinal direction, between the two side edges 19 of a tab 17.

In some such alternative embodiments, only certain of the weakening features 21 intercept side edges 19 of respective tabs 17. In other words, the length in the longitudinal direction of the weakening sections 21 is smaller than the distance, measured in the longitudinal direction, between the two side edges 19 of a tab 17.

In the embodiment example of figure 4, the longitudinal track 20 comprises weakening sections 21 and non-weakened sections 22.

The weakening sections 21 alternate along the longitudinal track 20 with the non-weakened sections 22.

The weakening sections 21 have equal lengths in the longitudinal direction.

The non-weakened sections 22 have equal lengths in the longitudinal direction with respect to each other.

The length in the longitudinal direction of the weakening sections 21 is smaller than the distance, measured in the longitudinal direction, between the two side edges 19 of a tab 17.

The length in the longitudinal direction of at least one weakening section 21 is greater than the length in the longitudinal direction of any non-weakened section 22.

The length in the longitudinal direction of any weakening section 21 is greater than the length in the longitudinal direction of any non-weakened section 22.

No weakening section 21 intercepts side edges 19 of tabs 17.

The longitudinal track 20 passes through the transversely inner end 17b of the tabs 17. The longitudinal track 20 is coincident with the straight line R with which the transversely inner ends 17b of the tabs 17 are aligned.

Along the weakening sections 21, the thickness of the electrode sheet 11 is reduced by an amount of between 5% and 70%, for example it is reduced by between 8% and 22%.

Along all the weakening sections 21, the thickness of the electrode sheet 11 is reduced by a same amount.

Alternatively, along the weakening sections 21, the thickness of the electrode sheet 11 is reduced by 100%. In this case, the thickness of the electrode sheet 11 is substantially zeroed by pass-through notches on the electrode sheet 11 in correspondence of the weakening sections 21.

Alternatively, along some weakening sections 21, the thickness of the electrode sheet 11 is reduced by an amount of between 5% and 70%, for example it is reduced by between 8% and 22% and in other weakening sections the thickness of the electrode sheet 11 it is reduced by 100% by pass-through notches.

In some alternative embodiments, the longitudinal track 20 is placed between the transversely outer end 17a and the transversely inner end 17b of the tabs 17.

In alternative embodiments, the length in the longitudinal direction of the weakening sections 21 is equal to the length in the longitudinal direction of the non-weakened sections 22.

In all the embodiments discussed above, the plurality of tabs 17, the longitudinal track 20, the weakening sections 21 and the non-weakened sections 22 have been described in relation to a single free edge 12a of the electrode sheet 11.

In other embodiments, all the features relating to the plurality of tabs 17, the longitudinal track 20, the weakening sections 21 and the non-weakened sections 22 can also be identically present at the other longitudinal free edge 12b of the electrode sheet 11.

A method for producing an electrode 10 according to the present invention provides for applying the active material for electrodes 14 to a portion of the current collector 13 or to the entire current collector 13.

In the case where the active material for electrodes 14 is applied to only a portion of the current collector 13, that portion is defined by the second portion 16 of the electrode sheet 11.

In the case where the active material for electrodes 14 is applied to the entire current collector 13, this operation is followed by an operation of ablation of the active material for electrodes 14 from a portion of current collector 13, so as to obtain said second portion 16 of the electrode sheet 11.

In both cases, on the electrode sheet 11 a first portion 15 is obtained which extends transversely from the free edge 12a of the electrode sheet 11 and which is not coated with active material for electrodes 14.

These operations can be performed on only one surface of the current collector 13 or on both surfaces of the current collector 13.

The electrode sheet 11 thus obtained can be wound on itself to form a roll of electrode sheet 23 for temporary storage or for direct use.

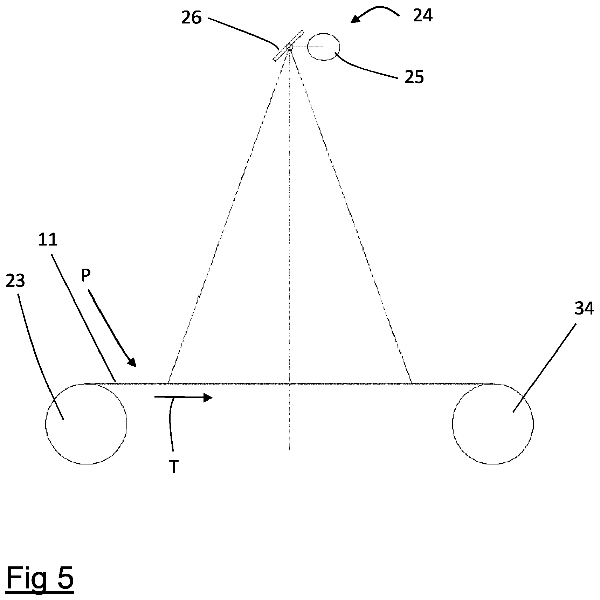

The electrode sheet 11 is unwound from the roll of electrode sheet 23 to be fed along a transport path P in a transport direction T (schematised in figure 5).

Above the transport path P there is provided a laser device 24 which comprises a laser oscillator 25 emitting a laser beam and a galvanometric scanner 26 configured to move the focal point of the laser beam and focus it at a desired position along the transport path P and on the electrode sheet 11. The galvanometric scanner 26 is a device configured to deviate the laser beam along two mutually orthogonal dimensions contained in the plane defined by the electrode sheet 11 placed below the laser device 24. The galvanometric scanner 26 may comprise two mirrors mounted on a galvanometer in such a way that they rotate on mutually skewed and preferably perpendicular axes.

When the electrode sheet 11 travels the transport path P in the transport direction T, the laser device 24 is activated to reduce the thickness of the electrode sheet 11 along the longitudinal track 20 and to cut the plurality of tabs 17.

These operations of reducing the thickness of the electrode sheet 11 and making the tabs 17 are implemented "on the fly", i.e. while the electrode sheet 11 is moving along the transport direction T.

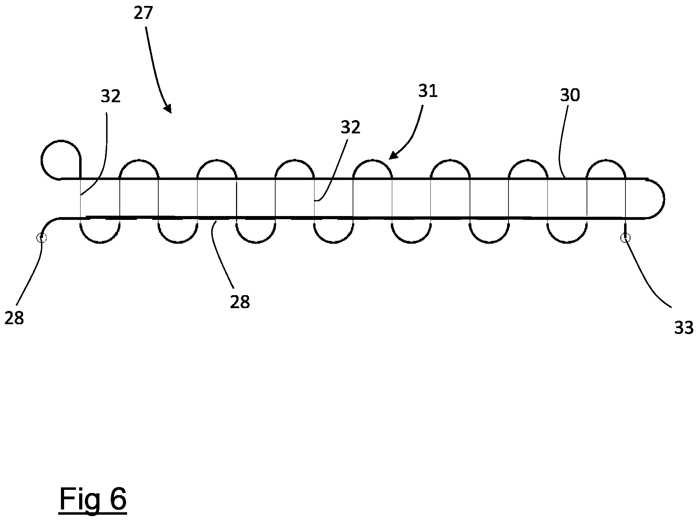

In the preferred embodiment of the invention, the combined motion of the electrode sheet 11 (moving in rectilinear motion) and of the laser beam (moving along two mutually orthogonal dimensions contained in the plane defined by the electrode sheet 11) results in a processing trajectory 27 of the focus point of the laser beam on the electrode sheet 11. This processing trajectory 27 is schematised in figure 6.

The processing trajectory 27 travelled by the focus point of the laser beam on the electrode sheet 11 is repeated substantially equal to itself for a sufficient number of times to reduce the thickness of the electrode sheet 11 and to cut the tabs 17 for a desired length along the electrode sheet 11.

In the preferred embodiment of the invention, said processing trajectory 27 starts from an initial point 28, follows a first straight section 29, makes a U-bend, follows a second straight section 30 returning towards the initial point 28, travels a further bend and then follows a serpentine path 31 (composed of curved and straight sections 32) placed astride the first 29 and the second straight section 30 up to a final point 33. The final point 33 of each processing trajectory 27 is made to coincide with the initial point 28 of the successive processing trajectory 27.

The first straight section 29 of the processing trajectory 27 is made to coincide with the longitudinal track 20 whose thickness is to be reduced, the second straight section 30 of the processing trajectory 27 is made to coincide with the free edge 12a of the electrode sheet 11 and the straight sections 32 of the serpentine path 31 are made to coincide with the side edges 18 of the tabs 17 to be provided.

By modulating the power of the laser oscillator 25 between a minimum power equal to zero and a maximum power, it is possible to cut the tabs 17 and to reduce the thickness of the electrode sheet 11 along the weakened sections 21.

In particular, in order to cut the tabs 17, the power of the laser oscillator 25 is set to a first power capable of cutting pass-through notches in the electrode sheet 11. This first power is used when the focus point of the laser beam travels along the straight sections 32 of the serpentine 31 of the processing trajectory 27.

When the reduction of the thickness of the electrode sheet in correspondence of a weakened section 21 is less than 100%, the power of the laser oscillator 25 is set to a second power capable of reducing the thickness of the electrode sheet 11 by the desired amount. This second power is used when the focus point of the laser beam travels along the first straight section 29 of the processing trajectory 27 and in correspondence of the weakening sections 21.

When the thickness of the electrode sheet at a non-weakened section 22 is to be left untouched, the power of the laser oscillator 25 is set to a null value. This null power value is used when the focus point of the laser beam travels along the first straight section 29 of the processing trajectory 27 and in correspondence of the non-weakened sections 22. This null power value is used when the focus point of the laser beam travels along the curved sections of the machining trajectory 27.

When the tabs 17 have been provided on the portion of electrode sheet 11 being processed and the weakening sections 21 have been provided, the electrode sheet 11 continues to travel along the transport path P in the transport direction T in order to be wound and form a further roll of electrode sheet 34.

## Claims

1. Method for forming an electrode for electrochemical cells comprising:
arranging an electrode sheet (11) having a thickness, a length (L) and a height (H), wherein the length (L) is measured along a longitudinal direction, the height (H) is measured along a transverse direction and the thickness is measured along a direction perpendicular to the longitudinal direction and the transverse direction, said electrode sheet (11) having a longitudinal free edge (12a);
cutting a plurality of tabs (17) on said electrode sheet (11) in a first portion (15) of electrode sheet which extends transversely from said free edge (12a);
reducing the thickness of the electrode sheet (11) along a longitudinal track (20) contained in said first portion (15) of the electrode sheet (11).

2. Method according to claim 1, wherein cutting a plurality of tabs (17) comprises providing a plurality of tabs (17) wherein each tab (17) extends from a transversely outer end (17a) to a transversely inner end (17b); said longitudinal track (20) being placed between the transversely outer end (17a) and the transversely inner end (17b) of said tabs (17) or passing through the transversely inner end (17b) of said tabs (17).

3. Method according to claim 2, wherein the transversely inner ends (17b) of the tabs (17) of said plurality of tabs (17) are aligned with each other along a straight line (R), said longitudinal track (20) being aligned with said straight line (R).

4. Method according to any one of the preceding claims, wherein said longitudinal track (20) comprises weakening sections (21) that are consecutive to each other.

5. Method according to any one of claims 1 to 4, wherein said longitudinal track (20) comprises weakening sections (21) and non-weakened (22) sections.

6. Method according to claim 5, wherein reducing the thickness of the electrode sheet (11) comprises reducing the thickness of the electrode sheet (11) by an amount of between 5% and 70% along certain weakening sections (21) and between 5% and 100% along other weakening sections (21).

7. Method according to any one of claims 4 to 6, wherein reducing the thickness of the electrode sheet (11) comprises directing a laser beam onto the electrode sheet (11) along said longitudinal track (20) and onto said weakening sections (21).

8. Method according to claim 7, wherein cutting a plurality of tabs (17) is implemented using said laser beam and wherein reducing the thickness of the electrode sheet (11) is implemented while transporting the electrode sheet (11) along the transport direction (T).

9. Method according to claim 8, wherein cutting a plurality of tabs (17) is carried out by implementing said laser at a first power and wherein reducing the thickness of the electrode sheet (11) is carried out by implementing said laser at a second power; said first power being greater than said second power.

10. Electrode (10) for electrochemical cells comprising:
an electrode sheet (11) having a thickness, a length (L) and a height (H), wherein the length (L) is measured along a longitudinal direction, the height (H) is measured along a transverse direction and the thickness is measured along a direction perpendicular to the longitudinal direction and the transverse direction, said electrode sheet (11) having a longitudinal free edge (12a);
a plurality of tabs (17) on said electrode sheet (11) in a first portion (15) of the electrode sheet extending transversely from said free edge (12a);
a longitudinal track (20) contained in said first portion (15) of electrode sheet and along which the thickness of the electrode sheet (11) is reduced.

11. Electrode according to claim 10, wherein each tab (17) of said plurality of tabs (17) extends from a transversely outer end (17a) to a transversely inner end (17b); said longitudinal track (20) being placed between the transversely outer end (17a) and the transversely inner end (17b) of said tabs (17) or passing through the transversely inner end (17b) of said tabs (17).

12. Electrode according to claim 11, wherein the transversely inner ends (17b) of the tabs (17) of said plurality of tabs (17) are aligned with each other along a straight line (R); said longitudinal track (20) being aligned with said straight line (R).

13. Electrode according to any one of claims 10 to 12, wherein said longitudinal track (20) comprises weakening (21) and non-weakened (22) sections.

14. Electrode according to claim 13, wherein the thickness of the electrode sheet (11) is reduced along all the weakening sections (21) of the longitudinal track (20).

15. Electrode according to any one of claims 13 or 14, wherein the thickness of the electrode sheet (11) is reduced by an amount of between 5% and 70% along certain weakening sections (21) and between 5% and 100% along other weakening sections (21).
